Europäisches Patentamt

European Patent Office

Office européen des brevets

(19)

(11) Veröffentlichungsnummer : **0 213 232**
**B1**

(12) **EUROPÄISCHE PATENTSCHRIFT**

(45) Veröffentlichungstag der Patentschrift.:
06.07.88

(51) Int. Cl.⁴ : **A 21 C 1/06**, B 01 F 15/02

(21) Anmeldenummer : 85111195.5

(22) Anmeldetag : 05.09.85

(54) Nahrungsmittelverarbeitungsvorrichtung.

(73) Patentinhaber : **A. Stephan u. Söhne GmbH & Co**
**Stephanplatz 2**
**D-3250 Hameln (DE)**

(72) Erfinder : **Otto, Friedrich**
**Reuterweg 21**
**D-3250 Hameln 1 (DE)**

(74) Vertreter : **Gramm, Werner, Prof. Dipl.-Ing. et al**
**Patentanwälte Gramm + Lins Theodor-Heuss-**
**Strasse 2**
**D-3300 Braunschweig (DE)**

(43) Veröffentlichungstag der Anmeldung :
**11.03.87 Patentblatt 87/11**

(45) Bekanntmachung des Hinweises auf die Patenterteilung : **06.07.88 Patentblatt 88/27**

(84) Benannte Vertragsstaaten :
**AT BE CH DE FR GB IT LI NL SE**

(56) Entgegenhaltungen :
**DE-A- 2 434 330**
**DE-C- 172 211**
**GB-A- 1 064 641**
**US-A- 172 513**
**US-A- 2 837 356**
**US-A- 4 075 713**

EP 0 213 232 B1

Jouve, 18, rue St-Denis, 75001 Paris, France

## Beschreibung

Die Erfindung betrifft eine Nahrungsmittelverarbeitungsvorrichtung mit einer mit lichtem Abstand über dem Boden liegend auf einem Grundrahmen angeordneten Trommel, die einen verschließbaren oberen Einlaß, einen unteren, einteilig und auf seiner dem Innenraum der Trommel zugewandten Seite konturfolgend ausgebildeten Auslaßschieber sowie einen angelenkten Stirndeckel aufweist, in dem zentrisch ein mit einem eigenen Antrieb versehener, winkelförmig ausgebildeter Transportflügel gelagert ist, dessen horizontaler Schenkel mit einer Schabkante an der Innenwandung des Trommelmantels der Trommel anliegt, in der parallel zu und unterhalb von ihrer Trommelachse eine horizontale Werkzeugwelle fliegend gelagert ist, die auswechselbare Werkzeuge zum Zerkleinern, Schneiden, Reiben, Rühren, Mischen, Mengen, Emulgieren und/oder Kneten trägt, durch die rückwärtige Stirnwandung der Trommel ragt und mit einem ebenfalls auf dem Grundrahmen angeordneten Hauptmotor in Drehverbindung steht, wobei der Auslaßschieber an seinem Umfang vier Leisten aufweist, die abdichtend gegen einen die untere Ausfallöffnung umgebenden, fest mit der Trommel verbundenen Ausfallrahmen anliegen und die Führung für den Auslaßschieber aus zwei in Verschieberichtung angeordneten, zwei Längsleiten des Auslaßschiebers untergreifenden Führungsleisten besteht.

Eine derartige Ausführungsform läßt sich der DE-B-24 34 330 entnehmen. Durch die nach unten verlegte, exzentrische Anordnung der Werkzeugwelle lassen sich auch kleinere Füllmengen mit den Werkzeugen bearbeiten ; es wird außerdem eine gute Durchmischung erzielt. Die Trommel kann z. B. etwa 150 l fassen, so daß sich in der Trommel bis zu 100 kg Masse bearbeiten läßt.

Da es sich um eine Nahrungsmittelverarbeitungsvorrichtung handelt, kommt der Reinigungsmöglichkeit der Maschine eine besondere Bedeutung zu. Der Erfindung liegt somit die Aufgabe zugrunde, die eingangs erläuterte Vorrichtung so zu konzipieren, daß sich insbesondere der Auslaßschieber, der Transportflügel sowie die Werkzeugwelle einfach, schnell und zuverlässig reinigen lassen.

Diese Aufgabe wird gemäß der Erfindung durch folgende Merkmale gelöst :

a) Der Auslaßschieber besteht aus Kunststoff ;

b) die beiden genannten Führungsleisten hängen lösbar jeweils an einer am Ausfallrahmen befestigten Halte- und Spanneinrichtung ;

c) zum leichten Demontieren und Reinigen bzw. Spülen weisen die im angelenkten Stirndeckel vorgesehene zentrische Durchtrittsöffnung für die Antriebswelle des Transportflügels ebenso wie die exzentrische, in der rückwärtigen Stirnwandung vorgesehene Durchtrittsöffnung für die Werkzeugwelle einen erheblich größeren Durchmesser auf als die durchgeführte Welle, wobei in den so gebildeten Ringraum eine Gleitdichtung geschoben ist, die durch Anziehen einer auf der Welle sitzenden Spannmutter radial nach außen wirkt und somit dichtet.

Dabei ist es zweckmäßig, wenn der Ausfallrahmen den Leisten des Auslaßschiebers zugeordnete Abdichtflächen aufweist, die aus Stahl bestehen und nur wenige Millimeter breit und wenige zehntel Millimeter erhaben sind. Gleichzeitig ist es vorteilhaft, wenn die Halte- und Spanneinrichtung für jede Führungsleiste aus einem am Ausfallrahmen befestigten Winkelstück besteht, das mit seinem lotrechten Schenkel in eine Längsnut einer an der Führungsleiste befestigten Spannplatte eingreift, die einen nach oben ragenden Gewindebolzen trägt, der durch einen zur Seite hin offenen Einschubschlitz des Winkelstücks ragt und auf seinem freien Ende eine Spannmutter trägt, die über eine Tellerfeder auf das Winkelstück drückt. Einerseits läßt sich durch bloßes Lösen der beiden Spannmuttern der Auslaßschieber schnell und einfach ausbauen. Andererseits läßt sich durch die Anordnung der Tellerfedern beim Anziehen der Spannmuttern ein definierter Anpreßdruck zwischen den genannten Abdichtflächen und den Längsleisten des Auslaßschiebers erzielen. Dadurch werden eine zuverlässige Abdichtung und gleichzeitig eine klemm- und ruckfreie Verschiebung des Auslaßschiebers gewährleistet. Die vorstehend genannte Ausbildung der Abdichtflächen gewährleistet einen ausreichend großen Flächendruck und minimiert den Verschleiß. Abdichtung, Verschleiß und Gleiteigenschaften des Auslaßschiebers sind dann optimal, wenn der Auslaßschieber aus Polyamid besteht. Dieses Material ermöglicht zudem eine einfache und zuverlässige Reinigung des Schiebers.

Die Gleitdichtungen für die Transportflügel — sowie die Werkzeugwelle bestehen vorzugsweise jeweils aus zwei identischen Stahlringen mit Gummimanschette. Der Transportflügel ist erfindungsgemäß mit einer die Gleitdichtung beaufschlagenden Buchse auf die durch den Stirndeckel ragende, als Keilwelle ausgebildete Antriebswelle gesteckt und durch eine großdimensionierte Hutmutter lösbar festgelegt, die auf einem an der Stirnseite der Keilwelle befestigten Gewindebolzen geschraubt ist und mit einer ringförmigen Dichtlippe gegen die genannte Buchse gepreßt wird. Die die Gleitdichtung der Werkzeugwelle beaufschlagende Spannmutter ist vorzugsweise ein Bajonettring. Durch Lösen der Hutmutter läßt sich der Transportflügel in einfacher Weise von der Keilwelle abziehen. Dadurch wird die Gleitdichtung freigegeben, die sich dann ebenso einfach von der Keilwelle abziehen läßt. Dadurch wird der vorstehend erläuterte Ringraum freigegeben, durch den nunmehr in einfacher und zuverlässiger Weise eine Spülungsreinigung vom Trommelinnenraum nach außen vorgenommen werden kann. Das Spülwasser läuft außerhalb der Trommel ab. In gleicher Weise läßt sich die Gleitdichtung der Werkzeugwelle durch Lösen des genannten Bajonettringes freilegen. Nach dem Abziehen der Gleitdichtung kann auch hier eine Reinigungsspülung aus dem Trommelinnenraum nach außen durch den freigelegten Ringraum hindurch erfolgen.

Der obere Einlaß der Trommel kann im Trommelmantel etwas unterhalb seiner höchsten Stelle zur Bedienungsseite hin angeordnet sein. Dadurch läßt sich die Vorrichtung trotz ihrer großen Kapazität auch von mittelgroßen Menschen einfach bedienen. Dennoch bestehen verschiedene Alternativen für den Abtransport des fertigen Produktes. So läßt sich die Trommel auf dem Grundrahmen so hoch anordnen, daß sich unter den Auslaßschieber z. B. ein Containerwagen oder aber eine Förderbandeinrichtung schieben läßt.

Für eine manuelle Beschickung der Trommel ist es vorteilhaft, wenn die obere Beschickungsöffnung durch eine Klappe verschließbar ist, die aus durchsichtigem Material besteht, auf ihrer Innenseite konturfolgend ausgebildet ist und auf einer parallel zur Trommelachse liegenden Verschwenkachse lösbar gehalten ist. Dadurch ist einerseits die manuelle Zugabe von Zutaten möglich ; andererseits läßt sich die Materialbearbeitung durch die Klappe beobachten.

Wenn die durchsichtige Klappe auf ihrer Innenseite konturfolgend ausgebildet ist, würde der Transportflügel mit seiner Schabkante auch die Klappe überstreichen. Bei zum Schmieren neigenden Massen wird dadurch die Transparenz der Klappe stark beeinträchtigt. Es kann daher vorteilhaft sein, wenn zumindest ein Teilbereich der konturfolgenden Innenfläche der Klappe gegenüber der Innenfläche des Trommelmantels etwas zurückgesetzt ist. Schon bei etwa um 1 mm zurückgesetzter Innenfläche bleibt die Klappe in diesem Bereich klar.

Die Beschickung der Trommel kann aber auch über einen Schnorchel, Trichter, einen Schlauch o. dergl. vollautomatisch erfolgen. Die Klappe wird dann ersetzt durch einen fest aufgesetzten Trichter mit entsprechenden Anschlüssen.

Der Trommelmantel kann als Doppelwandung ausgebildet sein, wenn eine Kühlung und/oder Beheizung der Trommel gewünscht wird. Die Vorrichtung kann auch für Betrieb im Unter- bzw. Überdruck ausgelegt werden. Es können dann in die Trommel mündende Dampfventile o. dergl. vorgesehen sein.

In die Trommel ragt zweckmäßig ein elektronisches Thermometer zur exakten Temperaturmessung. An der auf der Bedienungsseite vorgesehenen Schalttafel kann eine Zeitwahluhr zur Vorgabesteuerung und Beendigung z. B. der Knetzeiten vorgesehen sein. Ferner kann ein Leistungs-Zeitschreiber oder aber ein Strom-Zeit-Schreiber vorgesehen sein. An den Aufzeichnungen läßt sich dann der optimale Knetverlauf bzw. die optimale Energieeinbringung in die aufzubereitende Masse ablesen.

Durch die in den Ansprüchen 10 bis 13 enthaltenen Merkmale ergibt sich eine leicht aus- bzw. einzubauende Klappe, die sich einfach und schnell reinigen läßt. Auch der Knebelgriff in der Platte läßt sich schnell demontieren. Die taschenförmige Hinterschneidung ist möglichst groß und mit flachen Rundungen ausgebildet, so daß auch hier eine sichere und einfache Reinigung möglich ist. Die genannte Ablauföffnung läßt liegengebliebenes oder beim Öffnen der Klappe herausgespritztes Material wieder in den Trommelinnenraum abfließen. Hierzu ist es vorteilhaft, wenn die Ablauföffnung in der tieferliegenden Trichterlängswandung vorgesehen ist, deren Innenfläche gegenüber der Horizontalen nur flach nach oben geneigt ist.

Weitere Merkmale sind Gegenstand weiterer Unteransprüche und werden anhand von Ausführungsbeispielen näher erläutert.

Durch die Erfindung wurde eine funktionssichere, bedienerfreundliche Nahrungsmittelverarbeitungsmaschine geschaffen, deren Ein- und Auslaß eine unkomplizierte Konzeption aufweisen und wasser- und ggf. auch vakuumdicht sein können. Die neue Vorrichtung wird höchsten Anforderungen an Hygiene unter Vermeidung von Spalten und schlecht zu reinigenden Stellen in den Food-Zonen gerecht. Für eine unkomplizierte Reinigung sind die Teile im Food-Zonen-Bereich mit wenigen Handgriffen montier- bzw. demontierbar.

In der Zeichnung sind einige als Beispiele dienende Ausführungsformen der Erfindung dargestellt. Es zeigen :

Figur 1 in Seitenansicht eine Nahrungsmittelverarbeitungsvorrichtung mit einem eingefahrenen Containerwagen ;

Figur 2 eine Darstellung gemäß Figur 1, wobei der Containerwagen durch eine Fördereinrichtung ersetzt ist ;

Figur 3 die Vorrichtung gemäß Figur 1 (ohne Containerwagen) in Rückansicht ;

Figur 4 die Vorrichtung gemäß Figur 1 in Draufsicht ;

Figur 5 die Vorrichtung gemäß Figur 3 in vorderer Stirnansicht ;

Figur 6 eine abgewandelte Ausführungsform in einer Darstellung gemäß Figur 5 ;

Figur 7 einen Längsschnitt durch die Vorrichtung gemäß Figur 1 (ohne Containerwagen) ;

Figur 7a in vergrößertem Maßstab im Längsschnitt das in Figur 7 mit einem strichpunktierten Kreis I markierte Detail ;

Figur 7b in der in Figur 7 eingezeichneten Blickrichtung II in vergrößertem Maßstab die Stirnseite der Werkzeugwelle ;

Figur 7c in vergrößertem Maßstab im Längsschnitt das in Figur 7 mit dem Pfeil III markierte Detail ;

Figur 7d in vergrößertem Maßstab einen Auslaßschieber in einer Darstellung gemäß Figur 7 und

Figur 8 in vergrößertem Maßstab im Ausschnitt einen Querschnitt gemäß der Linie VIII-VIII in Figur 7.

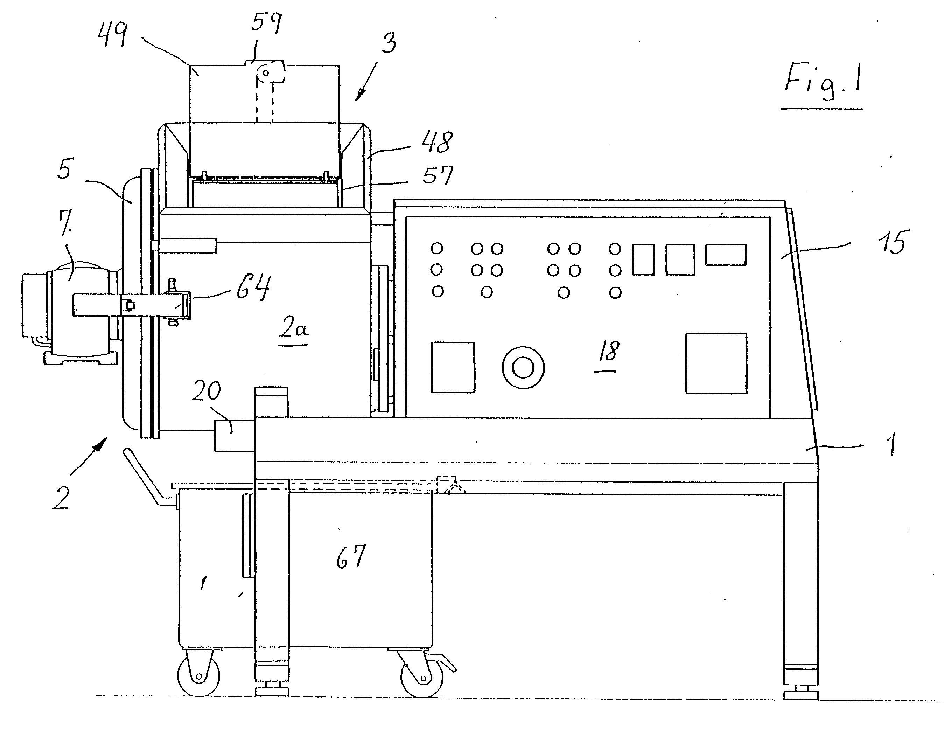

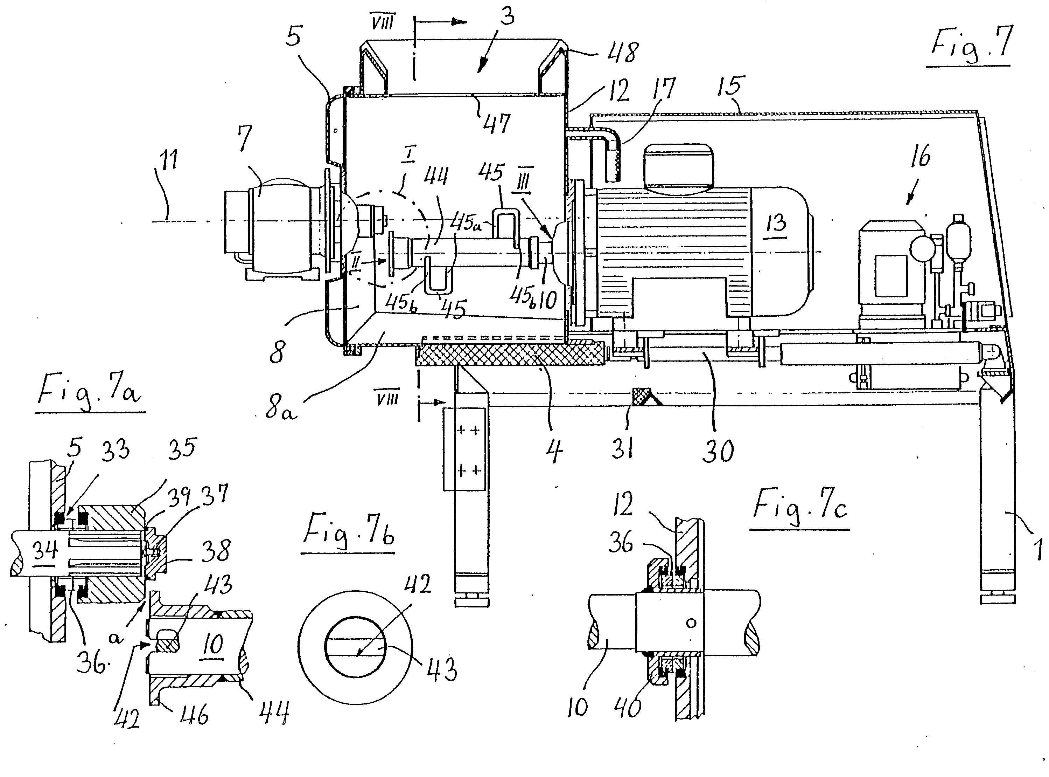

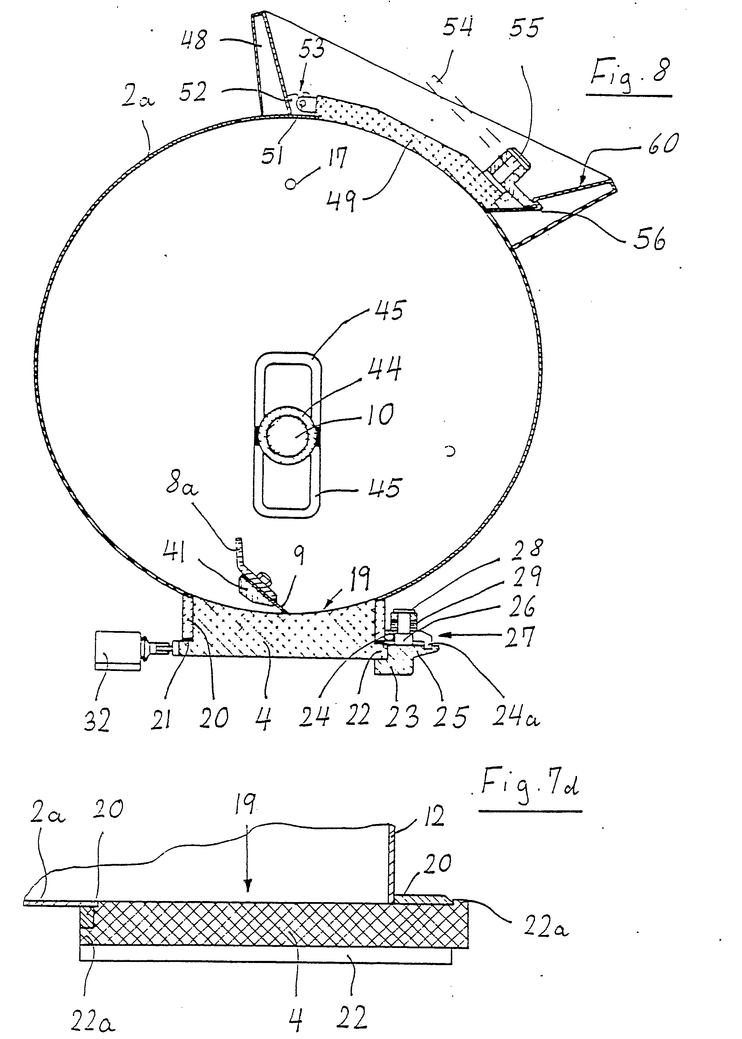

Die insbesondere in den Figuren 1 und 7 dargestellte Nahrungsmittelverarbeitungsvorrichtung umfaßt eine mit lichtem Abstand über dem Boden liegend auf einem Grundrahmen 1 angeordnete Mischtrommel 2, die einen verschließbaren oberen Einlaß 3 sowie einen unteren Auslaßschieber 4 aufweist. An dem in Figur 1 linken Ende der Mischtrommel 2 ist ein Stirndeckel 5 angelenkt, der um eine lotrechte Achse 6 verschwenkbar ist. In dem Stirndeckel 5 ist zentrisch ein mit einem eigenen Antrieb 7 versehener, winkelförmig ausgebildeter Transportflügel 8 gelagert, dessen horizontaler Schenkel 8a mit einer Schabkante 9 an der Innenwandung des Trommelmantels 2a der Mischtrommel 2 anliegt (siehe auch Figur 8). In der Mischtrommel 2 ist eine horizontale Werkzeugwelle 10 fliegend gelagert, die parallel zu und unterhalb von der zentrischen Trommelachse 11 liegt.

Die Mischtrommel 2 ist auf ihrer rückwärtigen Stirnwandung 12 fest mit einem Hauptmotor 13 verflanscht, der die durch die rückwärtige Stirnwandung 12 ragende Werkzeugwelle 10 antreibt. Mischtrommel 2 und Hauptmotor 13 sind auf Schwingmetall 14 der Oberseite des Grundrahmens 1 gelagert. Der Hauptmotor 13 befindet sich innerhalb einer Gehäuseabdeckung 15, die u.a. einen hydraulischen Antrieb 16 zur Betätigung des Auslaßschiebers 4 umschließt.

In den oberen Bereich der rückwärtigen Stirnwandung 12 ist eine Wasserdosierleitung 17 eingeschweißt, aus der Wasser unter einem definierten Winkel gegen die Innenwandung des Trommelmantels 2a gespritzt werden kann. Nicht näher dargestellt sind ein Wasserzähler sowie eine in einer Schalttafel 18 vorgesehene Einstellvorrichtung, an der die gewünschte Wassermenge vorgegeben werden kann.

Der einteilig ausgebildete Auslaßschieber 4 ist auf seiner dem Innenraum der Mischtrommel 2 zugewandten Seite konturfolgend ausgebildet, liegt also exakt innerhalb der Innenkontur der Mischtrommel 2. Die untere Ausfallöffnung 19 ist von einem Ausfallrahmen 20 umgeben, der aus Stahl bestehende, nur wenige Millimeter breite und wenige zehntel Millimeter erhabene Abdichtflächen 21 aufweist, die mit der Oberseite von zwei am Umfang des Auslaßschiebers 4 angeordneten Längsleisten 22 zusammenwirken. Die Führung für den Auslaßschieber 4 besteht aus zwei in Verschieberichtung angeordneten, die beiden Längsleisten 22 untergreifenden Führungsleisten 23, die lösbar jeweils an einer am Ausfallrahmen 20 befestigten Halte- und Spanneinrichtung hängen. Letztere besteht aus einem am Ausfallrahmen 20 befestigten Winkelstück 24, das mit seinem lotrechten Schenkel 24a in eine Längsnut einer an der Führungsleiste 23 befestig-ten Spannplatte 25 eingreift. Diese Spannplatte 25 trägt einen nach oben ragenden Gewindebolzen 26, der durch einen zur Seite hin offenen Einschubschlitz 27 des Winkelstücks 24 ragt und auf seinem freien Ende eine Spannmutter 28 trägt, die über eine Tellerfeder 29 auf das Winkelstück 24 drückt. Vergleichbare Abdichtflächen 21 wirken mit in den beiden Stirnbereichen des Auslaßschiebers 4 vorgesehenen Querleisten 22a zusammen (s. Fig. 7d).

An seiner rückwärtigen Stirnseite hängt der Auslaßschieber 4 an einer von dem hydraulischen Antrieb 16 betätigten Hydraulikstange 30.

Durch Anziehen der beiden Spannmuttern 28 ergibt sich aufgrund der zwischengeschalteten Tellerfedern 29 ein definierter Anpreßdruck zwischen den Abdichtflächen 21 und den Leisten des Auslaßschiebers 4 und dadurch eine zuverlässige Abdichtung, die dennoch ein klemmfreies Verschieben des Auslaßschiebers 4 zuläßt. Zum Ausbau des Auslaßschiebers 4 werden lediglich die beiden Spannmuttern 28 gelöst, die im übrigen zusammen mit den Tellerfedern 29 auf den Gewindebolzen 26 verbleiben können. Die Führungsleisten 23 lassen sich dann in einfacher Weise zur Seite hin abziehen, wobei die Gewindebolzen 26 aus dem ihnen zugeordneten Einschubschlitz 27 herausgezogen werden. Der Auslaßschieber 4 klappt dann nach unten weg, bis er an einem Klotz 31 anliegt. Der weiterhin an der Hydraulikstange 30 hängende Auslaßschieber 4 sowie Ausfallöffnung 19, Ausfallrahmen 20 sowie die Halte- und Spanneinrichtung 24 bis 29 lassen sich dann einfach, zuverlässig und schnell reinigen.

In seiner Schließstellung beaufschlagt der Auslaßschieber 4 einen Endschalter 32 (siehe Figur 8), der in dieser Stellung verschiedene Funktionen der Vorrichtung freigibt.

Im angelenkten Stirndeckel 5 ist eine zentrische Durchtrittsöffnung 33 vorgesehen durch die eine von Antrieb 7 beaufschlagte Keilwelle 34 ragt, auf die der Transportflügel 8 mit einer Buchse 35 drehfest aufgeschoben ist. Die Durchtrittsöffnung 33 weist einen erheblich größeren Durchmesser auf als die Keilwelle 34. In den so gebildeten Ringraum ist eine Gleitdichtung 36 geschoben, die aus zwei identischen Stahlringen mit Gummimanschette besteht. Auf einem an der Stirnseite der Keilwelle 34 befestigten Gewindebolzen 37 ist eine großdimensionierte Hutmutter 38 aufgeschraubt, die beim Anziehen mit einer ringförmigen Dichtlippe 39 die Buchse 35 gegen die Gleitdichtung 36 preßt und diese dadurch radial nach außen verformt (s. Fig. 7a).

Die Abdichtung zwischen der rückwärtigen Stirnwandung 12 und der Werkzeugwelle 10 entspricht im wesentlichen der vorstehend erläuterten Bauart, wobei anstelle des Gewindebolzens 37 mit der Hutmutter 38 eine Spannmutter 40 in Form eines Bajonettringes vorgesehen ist, der auf die Werkzeugwelle 10 aufgeschoben ist und sich mit Hilfe eines Spannwerkzeuges in eine entspre-chende Aufnahme der rückwärtigen Stirnwan-dung 12 eindrehen läßt, wobei die im Ringraum zwischen Werkzeugwelle 10 und Stirnwandung 12 befindliche Gleitdichtung 36 beaufschlagt und in radialer Richtung nach außen verformt wird (s. Fig. 7c).

Während der Transportflügel langsam mit z. B. 20 U/min umläuft, kann die Werkzeugwelle 10 mit 750-1 200 U/min rotieren, wenn die Nahrungsmittelverarbeitungsvorrichtung als Knetmaschine eingesetzt wird.

Die Schabkante 9 des Transportflügels 8 besteht aus einem Kunststoffstreifen, der durch eine mit dem horizontalen Schenkel 8a verschraubte Klemmleiste 41 leicht lösbar fixiert ist (siehe Figur 8). Das freie Ende der Werkzeugwelle 10 weist einen hinterschnittenen, nach vorn offenen Radialschlitz 42 auf, in den ein Querbolzen 43 einer auf die Werkzeugwelle 10 gesteckten Werkzeughülse 44 eingreift, die die Werkzeuge 45 und an ihrem dem Stirndeckel 5 zugewandten Ende einen Ringbund 46 trägt, der einen geringen lichten Abstand a von der den Transportflügel 8 festlegenden Hutmutter 38 aufweist (s. Fig. 7a + 7b).

Transportflügel 8 und Werkzeuge 45 lassen sich schnell und einfach montieren und demontieren. Zur Demontage des Transportflügels 8 wird die Hutmutter 38 gelöst, worauf sich der Transportflügel 8 von der Keilwelle 34 abziehen läßt. Anschließend kann dann die Gleitdichtung 36 herausgezogen werden. Hierdurch wird der Ringraum zwischen Keilwelle 34 und Stirndeckel 5 freigelegt, so daß zur Reinigung eine einfache Durchspülung durch diesen Ringraum möglich ist ; das Spülwasser tritt dann nach außen aus. Durch Lösen der die Klemmleiste 41 haltenden Verschraubung läßt sich die Schabkante 9 schnell und einfach ausbauen und reinigen. Die Werkzeughülse 44 braucht lediglich von der Werkzeugwelle 10 abgezogen zu werden. Nach dem Lösen der Spannmutter 40 und dem Herausziehen der Gleitdichtung 36 kann auch hier der so entstehende Ringraum zwischen Werkzeugwelle 10 und rückwärtiger Stirnwandung 12 von innen nach außen durchspült werden, wobei das Spülwasser außerhalb der Mischtrommel 2 zwischen ihrer rückwärtigen Stirnwandung 12 und dem angeflanschten Hauptmotor 13 austritt.

Die Montage von Transportflügel und Werkzeug erfolgt entsprechend. Läuft die Werkzeugwelle 10 bei der Inbetriebnahme der Vorrichtung an, ergibt sich aufgrund der Massenträgheit bzw. eines auf die Werkzeuge 45 ausgeübten Widerstandes eine leichte Relativverdrehung zwischen Werkzeughülse 44 und Werkzeugwelle 10 und damit eine selbsttätige Verriegelung, indem der Querbolzen 43 die Hinterschneidung des Radialschlitzes 42 hintergreift. Sollte sich dennoch einmal eine Verschiebung der Werkzeughülse 44 auf der Werkzeugwelle 10 in axialer Richtung ergeben, dann würde sich sofort der Ringbund 46 der Werkzeughülse 44 an die Hutmutter 38 anlegen und so die Axialverschiebung begrenzen und unschädlich machen.

Die Werkzeughülse 44 kann Werkzeuge zum Zerkleinern, Schneiden, Reiben, Rühren, Mischen, Mengen, Emulgieren und/oder Kneten tragen. In den Figuren 7 und 8 ist als Ausführungsbeispiel ein Knetwerkzeug dargestellt, das sich insbesondere für festere Teige eignet. Hier trägt die Werkzeughülse 44 zwei gleich ausgebildete U-förmige Knetwerkzeuge 45, die um 180° gegeneinander versetzt und mit axialem Abstand voneinander so auf den sich gegenüberliegenden Seiten der Werkzeughülse 44 befestigt sind, daß die Enden der einander benachbarten U-Schenkel 45a der beiden Werkzeuge 45 auf der einen Hülsenseite und die der beiden axial äußersten U-Schenkel 45b auf der anderen Hülsenseite liegen (siehe Figur 7). In Stirnansicht der Werkzeughülse 44 bilden die beiden Werkzeuge 45 gemeinsam eine scheinbar geschlossene Kurve in Form eines flachen Rechteckes (siehe Figur 8). Die beiden Werkzeuge 45 sind aus Rundmaterial gebogen und daher sehr einfach zu reinigen.

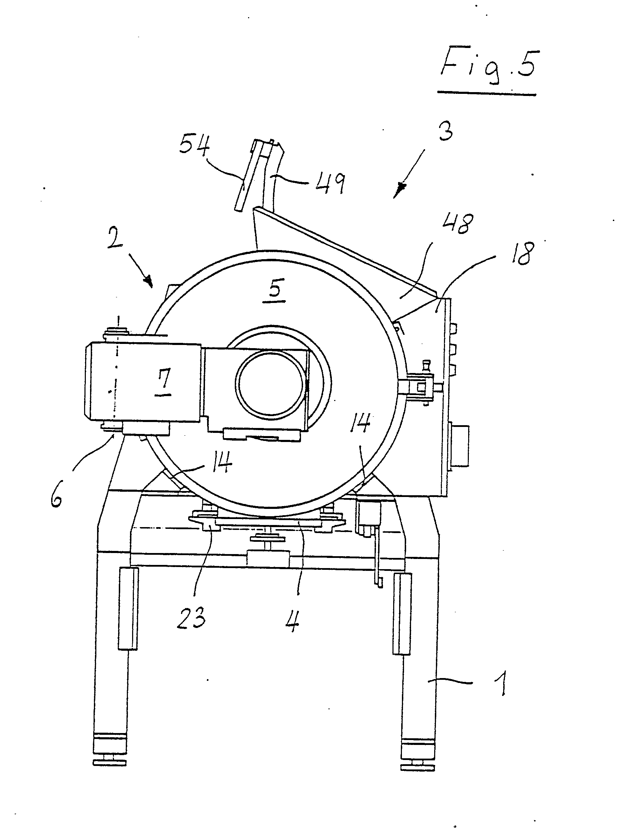

Insbesondere die Figuren 5 und 8 lassen erkennen, daß der obere Einlaß 3 der Mischtrommel 2 im Trommelmantel 2a etwas unterhalb seiner höchsten Stelle zur Bedienungsseite hin angeordnet sein kann. Diese Anordnung ist dann zweckmäßig, wenn die Beschickung der Mischtrommel 2 manuell erfolgen und zugleich eine Möglichkeit zur Beobachtung des Trommelinnenraumes vorgesehen werden soll. Bei dieser Ausführungsform ist eine obere Beschickungsöffnung 47 allseitig von einem flachen Trichter 48 umgeben, der aus hohl ausgebildeten Wandungen besteht und eine Klappe 49 umfaßt. Diese besteht aus durchsichtigem Material und ist auf ihrer Innenseite konturfolgend ausgebildet ; sie ist auf ihrer höherliegenden Längskante auf einer parallel zur Trommelachse 11 liegenden Verschwenkachse 50 lösbar gehalten. Die Verschwenkachse 50 weist zwei mit der Klappe 49 verbundene Steckzapfen 51 auf, von denen der eine Steckzapfen in Axialrichtung in eine erste Öse 52 gesteckt ist, während der andere Steckzapfen mit einer nicht dargestellten Anflächung in radialer Richtung in einen entsprechend dimensionierten Einschubschlitz 53 einer zweiten Öse 52 geschoben ist. Die Verriegelung der Klappe 49 erfolgt über einen verschwenkbaren Knebelgriff 54, der über eine Verschraubung 55 lösbar an der Klappe 49 festgelegt ist. Der Trichter 48 weist in seiner tieferliegenden Längswandung eine taschenförmige Hinterschneidung 56 auf zum Eingriff für den Knebelgriff 54. Innerhalb der Trichters 48 ist ein ggf. vom Trommelmantel 2a gebildeter Auflagebund 57 für die Klappe 49 vorgesehen. Im Bereich der vorstehend genannten Hinterschneidung 56 weist dieser Auflagebund 57 eine eine Ablauföffnung 58 bildende Ausnehmung auf, in die bei geschlossener Klappe 49 die Klappe mit einer entsprechend dimensionierten Abdichtleiste 59 bündig eingreift. Die Innenfläche 60 der tiefer gelegenen Längswandung des Trichters 48 ist gegenüber der Horizontalen nur flach nach oben geneigt (siehe insbesondere Figur 8).

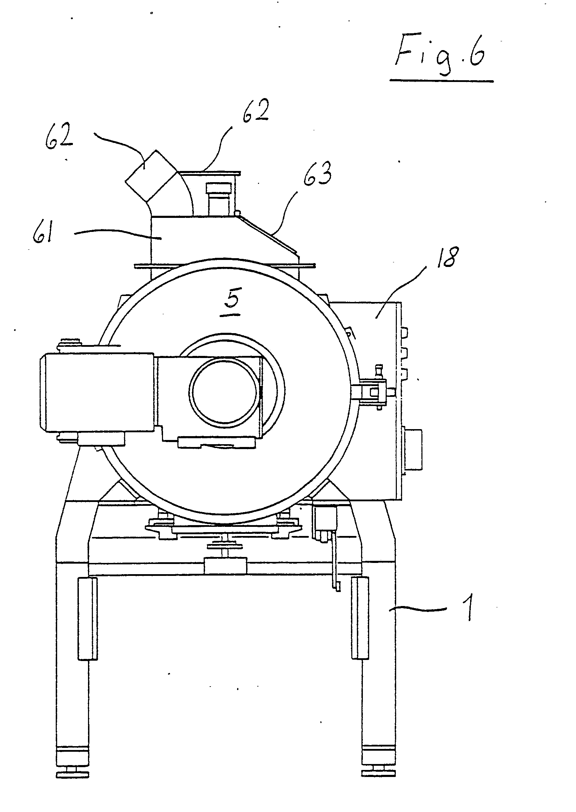

Figur 6 zeigt für den oberen Einlaß 3 eine abgewandelte Ausführungsform. Hier liegt der obere Einlaß 3 an der höchsten Stelle des Trommelmantels 2a und ist allseitig von einem Anschlußstutzen 61 übergriffen, der Schlauch- und Rohranschlüsse 62 sowie eine Sicht- und Bedienungsklappe 63 aufweist.

Der Stirndeckel 5 weist einen Exzenter-Kniehebel-Verschluß 64 auf, der eine leicht herausziehbare, den Handhebel 65 lagernde Drehachse 66 umfaßt.

Gemäß Figur 1 ist unterhalb des Auslaßschiebers 4 ein aus dem Grundrahmen 1 herausziehbarer Containerwagen 67 angeordnet, der in seiner dargestellten Befüllstellung einen nicht dargestellten Anschlagschalter beaufschlagt. Beim Hervorziehen des Containerwagens 67 setzt dieser Anschlagschalter die Maschine still.

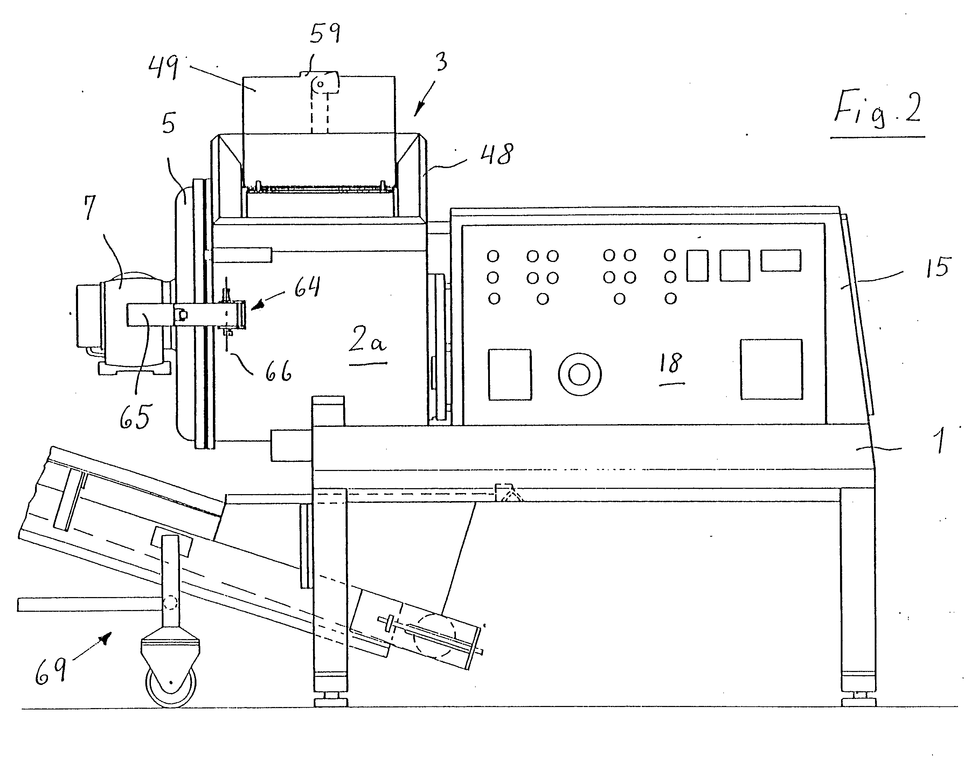

Bei der in Figur 2 dargestellten Ausführungsform ist anstelle eines Containerwagens eine Fördereinrichtung 69 unter den Auslaßschieber 4 geschoben.

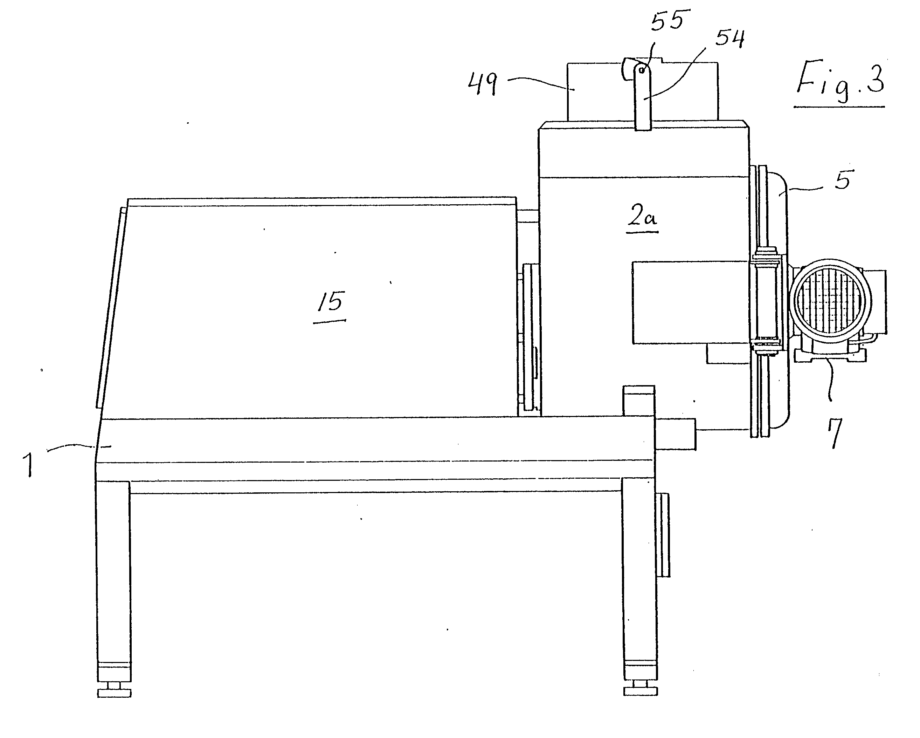

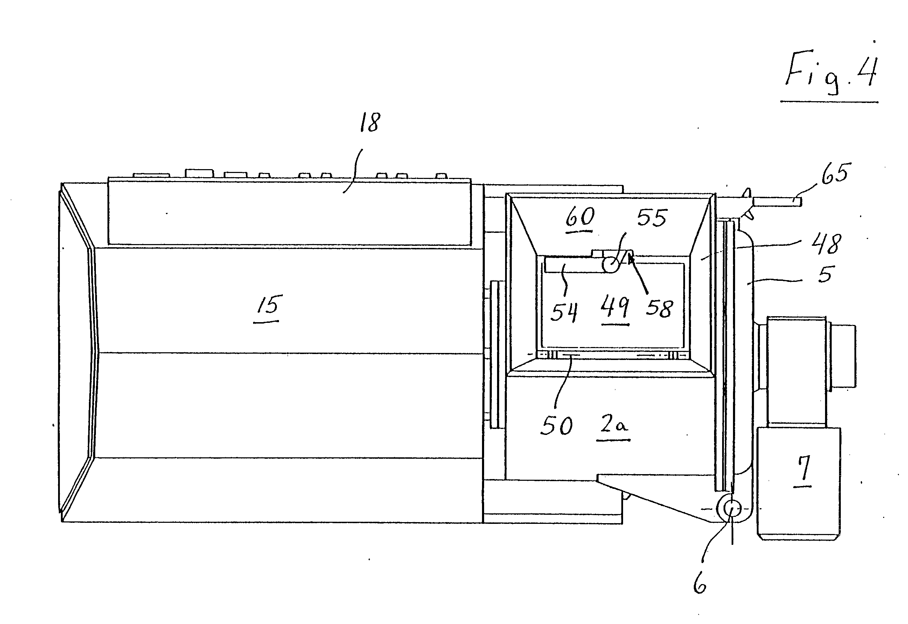

Die Figuren 1, 2, 3 und 5 zeigen die Klappe 49 in geöffneter Lage, während diese Klappe bei den Darstellungen in den Figuren 4 und 8 geschlossen ist. In Figur 7 wurde die Klappe wegen der besseren Übersichtlichkeit weggelassen. Die Verriegelung der Klappe erfolgt über einen nicht näher dargestellten Magnetschalter. Ist für die Vorrichtung ein Arbeitsbetrieb unter Vakuum vorgesehen, wird die Klappe 49 mit einer entsprechenden Dichtung versehen.

Für den Transportflügel 8 ist eine nicht näher dargestellte Positionsschaltung vorgesehen um sicherzustellen, daß der Transportflügel nicht unterhalb des oberen Einlasses 3 oder oberhalb des Auslaßschiebers 4 stehenbleibt.

Der Stirndeckel 5 beaufschlagt in seiner Schließstellung einen nicht dargestellten Endschalter, der beim Öffnen des Stirndeckels die Maschine stillsetzt.

**Patentansprüche**

1. Nahrungsmittelverarbeitungsvorrichtung mit einer mit lichtem Abstand über dem Boden liegend auf einem Grundrahmen (1) angeordneten Trommel (2), die einen verschließbaren oberen Einlaß (3), einen unteren, einteilig und auf seiner dem Innenraum der Trommel (2) zugewandten Seite konturfolgend ausgebildeten Auslaßschieber (4) sowie einen angelenkten Stirndeckel (5) aufweist, in dem zentrisch ein mit einem eigenen Antrieb (7) versehener, winkelförmig ausgebildeter Transportflügel (8) gelagert ist, dessen horizontaler Schenkel (8a) mit einer Schabkante (9) an der Innenwandung des Trommelmantels (2a) der Trommel (2) anliegt, in der parallel zu und unterhalb von ihrer Trommelachse (11) eine horizontale Werkzeugwelle (10) fliegend gelagert ist, die auswechselbare Werkzeuge (45) zum Zerkleinern, Schneiden, Reiben, Rühren, Mischen, Mengen, Emulgieren und/oder Kneten trägt, durch die rückwärtige Stirnwandung (12) der Trommel (2) ragt und mit einem ebenfalls auf dem Grundrahmen (1) angeordneten Hauptmotor (13) in Drehverbindung steht, wobei der Auslaßschieber (4) an seinem Umfang vier Leisten (22, 22a) aufweist, die abdichtend gegen einen die untere Ausfallöffnung (19) umgebenden, fest mit der Trommel (2) verbundenen Ausfallrahmen (20) anliegen und die Führung für den Auslaßschieber (4) aus zwei in Verschieberichtung angeordneten, zwei Längsleisten (22) des Auslaßschiebers (4) untergreifenden Führungsleisten (23) besteht, gekennzeichnet durch folgende Merkmale :

a) Der Auslaßschieber (4) besteht aus Kunststoff ;

b) die beiden genannten Führungsleisten (23) hängen lösbar jeweils an einer am Ausfallrahmen (20) befestigten Halte- und Spanneinrichtung (24-29) ;

c) zum leichten Demontieren und Reinigen bzw. Spülen weisen die in angelenkten Stirndeckel (5) vorgesehene zentrische Durchtrittsöffnung (33) für die Antriebswelle (34) des Transportflügels (8) ebenso wie die exzentrische, in der rückwärtigen Stirnwandung (12) vorgesehene Durchtrittsöffnung für die Werkzeugwelle (10) einen erheblich größeren Durchmesser auf als die durchgeführte Welle (34 bzw. 10), wobei in den so gebildeten Ringraum eine Gleitdichtung (36) geschoben ist, die durch Anziehen einer auf der Welle (34 bzw. 10) sitzenden Spannmutter (38 bzw. 40) radial nach außen wirkt und somit dichtet.

2. Vorrichtung nach Anspruch 1, dadurch gekennzeichnet, daß der Ausfallrahmen (20) den Leisten (22, 22a) des Auslaßschiebers (4) zugeordnete Abdichtflächen (21) aufweist, die aus Stahl bestehen und nur wenige Millimeter breit und wenige zehntel Millimeter erhaben sind.

3. Vorrichtung nach Anspruch 1 oder 2, dadurch gekennzeichnet, daß die Halte- und Spanneinrichtung für jede Führungsleiste (23) aus einem am Ausfallrahmen (20) befestigten Winkelstück (24) besteht, das mit seinem lotrechten Schenkel (24a) in eine Längsnut einer an der Führungsleiste (23) befestigten Spannplatte (25) eingreift, die einen nach oben ragenden Gewindebolzen (26) trägt, der durch einen zur Seite hin offenen Einschubschlitz (27) des Winkelstücks (24) ragt und auf seinem freien Ende eine Spannmutter (28) trägt, die über eine Tellerfeder (29) auf das Winkelstück (24) drückt.

4. Vorrichtung nach Anspruch 1, 2 oder 3, dadurch gekennzeichnet, daß der Auslaßschieber (4) aus Polyamid besteht.

5. Vorrichtung nach einem der vorhergehenden Ansprüche, dadurch gekennzeichnet, daß die Gleitdichtungen (36) für die Transportflügel — sowie die Werkzeugwele (34, 10) jeweils aus zwei identischen Stahlringen mit Gummimanschette bestehen.

6. Vorrichtung nach einem der vorhergehenden Ansprüche, dadurch gekennzeichnet, daß der Transportflügel (8) mit einer die Gleitdichtung (36) beaufschlagenden Buchse (35) auf die durch den Stirndeckel (5) ragende als Keilwelle ausgebildete Antriebswelle (34) gesteckt und durch eine großdimensionierte Hutmutter (38) lösbar festgelegt ist, die auf einem an der Stirnseite der Keilwelle (34) befestigten Gewindebolzen (37) geschraubt ist und mit einer ringförmigen Dichtlippe (39) gegen die genannte Buchse (35) gepreßt wird.

7. Vorrichtung nach einem der vorhergehenden Ansprüche, dadurch gekennzeichnet, daß die die Gleitdichtung (36) der Werkzeugwelle (10) beaufschlagende Spannmutter (40) ein Bajonettring ist.

8. Vorrichtung nach einem der vorhergehenden Ansprüche, dadurch gekennzeichnet, daß der obere Einlaß (3) der Trommel (2) im Trommelmantel (2a) etwas unterhalb seiner höchsten Stelle zur Bedienungsseite hin angeordnet ist.

9. Vorrichtung nach einem der vorhergehenden Ansprüche, gekennzeichnet durch eine eine obere Beschickungsöffnung (47) verschließende Klappe (49), die aus durchsichtigem Material besteht, auf ihrer Innenseite konturfolgend ausgebildet ist und auf einer parallel zur Trommelachse (11) liegenden Verschwenkachse (50) lösbar gehalten ist.

10. Vorrichtung nach Anspruch 9, dadurch gekennzeichnet, daß die Verschwenkachse (50) zwei mit der Klappe (49) verbundene Steckzapfen (51) aufweist, wobei der eine Steckzapfen (51) in Axialrichtung in eine entsprechende Öse (52) gesteckt ist, während der andere Steckzapfen (51) mit einer Anflächung in radialer Richtung in einen entsprechend dimensionierten Einschubschlitz (53) einer zweiten Öse (52) geschoben ist.

11. Vorrichtung nach Anspruch 9 oder 10, dadurch gekennzeichnet, daß die Verriegelung der Klappe (49) über einen verschenkbaren Knebelgriff (54) erfolgt, der über eine Verschraubung (55) löbar an der Klappe (49) festgelegt ist.

12. Vorrichtung nach Anspruch 11, dadurch gekennzeichnet, daß die Beschickungsöffnung (47) allseitig von einem flachen Trichter (48) umgeben ist, der eine taschenförmige Hinterschneidung (56) zum Eingriff für den Knebelgriff (54) und eine im Bereich dieser Hinterschneidung (56) gebildete Ablauföffnung (58) aufweist, die durch eine Aussparung in einem Auflagebund (57) für die Klappe (49) gebildet ist, die mit einer entsprechend dimensionierten Abdichtleiste (59) bündig in die genannte Ablauföffnung (58) eingreift.

13. Vorrichtung nach Anspruch 8 und 12, dadurch gekennzeichnet, daß die Ablauföffnung (58) in der tieferliegenden Trichterlängswandung vorgesehen ist, deren Innenfläche (60) gegenüber der Horizontalen nur flach nach oben geneigt ist.

14. Vorrichtung nach einem der Ansprüche 9 bis 13, dadurch gekennzeichnet, daß zumindest ein Teilbereich der konturfolgenden Innenfläche der Klappe (49) gegenüber der Innenfläche des Trommelmantels (2a) etwas zurückgesetzt ist.

15. Vorrichtung nach einem der vorhergehenden Ansprüche, dadurch gekennzeichnet, daß die Schabkante (9) des Transportflügels (8) aus einem Kunststoffstreifen besteht, der durch eine mit dem horizontalen Schenkel (8a) des Transportflügels (8) verschraubte Klemmleiste (41) leicht lösbar fixiert ist.

16. Vorrichtung nach einem der vorhergehenden Ansprüche, dadurch gekennzeichnet, daß das freie Ende der Werkzeugwelle (10) einen hinterschnittenen, nach vorn offenen Radialschlitz (42) aufweist, in den ein Querbolzen (43) einer auf die Werkzeugwelle (10) gesteckten Werkzeughülse (44) eingreift, die die Werkzeuge (45) und an ihrem dem Stirndeckel (5) zugewandten Ende einen Ringbund (46) trägt, der einen geringen lichten Abstand (a) von der den Transportflügel (8) festlegenden Spannmutter (38) aufweist.

17. Vorrichtung nach Anspruch 16, dadurch gekennzeichnet, daß die Werkzeughülse (44) zwei gleich ausgebildete U-förmige Knetwerkzeuge (45) trägt, die um 180° gegeneinander versetzt und mit axialem Abstand voneinander so auf den sich gegenüberliegenden Seiten der Werkzeughülse (44) befestigt sind, daß die Enden der einander benachbarten U-Schenkel (45a) der beiden Werkzeuge (45) auf der einen Hülsenseite und die der beiden axial äußersten U-Schenkel (45b) auf der anderen Hülsenseite liegen, wobei in Stirnansicht der Werkzeughülse (44) die beiden Werkzeuge (45) gemeinsam eine scheinbar geschlossene Kurve in Form eines flachen Rechteckes bilden.

18. Vorrichtung nach einem der vorhergehenden Ansprüche, dadurch gekennzeichnet, daß der Stirndeckel (5) einen Exzenter-Kniehebel-Verschluß (64) aufweist, der eine leicht herausziehbare, den Handhebel (65) lagernde Drehachse (66) umfaßt.

## Claims

1. Food-processing apparatus with a drum (2) mounted on a base frame (1) with a clear space above the ground, having a closable inlet (3) on top, a one-piece outlet slide (4) at the bottom with its side which faces the inside of the drum (2) being shaped to follow its contours and also a hinged front cover (5), in which an angular shaped transport blade (8) provided with its own drive (7) is centrally mounted, with its horizontal arm (8a) lying with a scraper edge (9) on the inner wall of the casing (2a) of the drum (2) ; in this drum, parallel to and below its drum axis (11), a horizontal tool shaft (10) is mounted in an overhung position and carries exchangeable tools (45) for grinding, cutting, grating, stirring, mixing, blending, emulsifying and/or kneading, and this projects through the back end wall (12) of the drum (2) and is in rotary connection with a main motor (13) also fitted on the base frame (1) ; the outlet slide (4) exhibits on its perimeter four strips (22, 22a) which lie against an outlet frame (20), which surrounds the lower outlet opening (19) and is rigidly attached to the drum (2), and act as a seal and the track for the outlet slide (4) consists of two guide strips (23) fitted in the direction of sliding and engaging two longitudinal strips (22) of the outlet slide (4), characterised by the following characteristics :
   a) the outlet slide (4) is made of plastic ;
   b) the two aforementioned guide strips (23) are releasably suspended on a holding and clamping device (24-29) attached to the outlet frame (20) ;
   c) for easy dismantling and cleaning or rinsing, the central opening (33) provided in the hinged front cover (5) through which the drive shaft (34) of the transport blade (8) passes and also the eccentric opening provided in the back end wall (12) for the passage of the tool shaft (10) have a considerably greater diameter than the shafts (34 or 10) which pass through them, with a friction seal (36), which is inserted into the annular space so formed, acting outwards through the tightening of a clamping nut (38 or 40) located on the shaft and thus sealing.

2. Apparatus as per claim 1, characterised by the fact that the outlet frame (20) has sealing surfaces (21) made of steel and only a few millimetres wide and a few tenths of a millimetre in height fitted to the strips (22, 22a) of the outlet slide (4).

3. Apparatus as per claim 1 or 2, characterised by the fact that the holding and clamping device for each guide strip (23) consists of an angle piece (24) attached to the outlet frame (20) and engaging with its vertical arm (24a) in a longitudinal groove of a clamping plate (25) attached to the guide strip (23) ; this plate carries an upwards projecting screw bolt (26), which projects through an insertion slot (27) of the angle piece (24) which is open to the side, carrying at its free end a clamping nut (28) which presses on the angle piece (24) via a cup spring (29).

4. Apparatus as per claim 1, 2 or 3, characterised by the fact that the outlet slide (4) is made of polyamide.

5. Apparatus as per one of the previous claims, characterised by the fact that the friction seals (36) for the transport blade and also the tool shaft (34, 10) consist in each case of two identical steel rings with a rubber collar.

6. Apparatus as per one of the previous claims, characterised by the fact that the transport blade (8) is fitted on to the drive shaft (34), which projects through the front cover (5) and is in the form of a spline shaft, with a bushing (35) which admits the friction seal (36) and it is releasably fastened by a large-sized cap nut (38), which is screwed on a screw bolt (37) attached to the front end of the spline shaft (34) and is pressed with an annular sealing lip (39) against the said bushing (35).

7. Apparatus as per one of the previous claims, characterised by the fact that the clamping nut (40) acting on the friction seal (36) of the tool shaft (10) is a bayonet ring.

8. Apparatus as per one of the previous claims, characterised by the fact that the inlet (3) at the top of the drum (2) is fitted in the drum casing (2a) a little below its highest point on the operating side.

9. Apparatus as per one of the previous claims, characterised by a flap (49) closing a filler opening (47) at the top and made of transparent material, which is shaped on its inner side so as to follow the drum contours and is releasably held on a pivoting axis (50) lying parallel to the drum axis (11).

10. Apparatus as per claim 9, characterised by the fact that the pivoting axis (50) has two guide pins (51) connected with the flap (49), with one guide pin (51) being pushed in an axial direction into a corresponding eye (52), while the other guide pin (51) with a flat section is pushed in a radial direction into a suitably dimensioned insertion slot (53) of a second eye (52).

11. Apparatus as per claim 9 or 10, characterised by the fact that the locking of the flap (49) is effected via a pivotable tommy (54), which is releasably fixed on the flap (49) via a screw joint (55).

12. Apparatus as per claim 11, characterised by the fact that the loading opening (47) is surrounded on all sides by a flat tunnel (48), which exhibits a pocket shaped undercut (56) for the tommy (54) to engage and a drain opening (58) formed in the region of this undercut (56), formed by a cut-out in a supporting shoulder (57) for the flap (49) which engages bindingly in the said drain opening (58) with a suitably dimensioned sealing strip (59).

13. Apparatus as per claims 8 and 12, characterised by the fact that the drain opening (58) is provided in the lower longitudinal wall of the funnel, whose inner surface (60) is only flatly inclined upwards in relation to the horizontal.

14. Apparatus as per one of the claims 9 to 13, characterised by the fact that at least a partial region of the contour-following inner surface of the flap (49) is set back a little in relation to the inner surface of the drum casing (2a).

15. Apparatus as per one of the previous claims, characterised by the fact that the scraper edge (9) of the transport blade (8) consists of a plastic strip which is fixed in an easily releasable manner by a clamping strip (41) screwed to the horizontal arm (8a) of the transport blade (8).

16. Apparatus as per one of the previous claims, characterised by the fact that the free end of the tool shaft (10) exhibits an undercut radial slot (42) open to the front, in which a transverse bolt (43) of a tool collar (44) placed on the tool shaft (10) engages ; this collar carries the tools (45) and, at its end facing the front cover (5), an annular shoulder (46), which has a small clear space (a) separating it from the clamping nut (38) which fixes the transport blade (8).

17. Apparatus as per claim 16, characterised by the fact that the tool collar (44) carries two U-shaped kneading tools (45) of the same design which are offset 180° to each other and so attached with an axial distance from each other on opposite sides of the tool collar (44) that the ends of the U-arms (45a) next to each other of the two tools (45) are situated on one side of the collar and those of the two axially outermost U arms (45b) on the other side of the collar, and in a front view of the tool collar (44) the two tools (45) form together a make-believe closed curve in the form of a flat rectangle.

18. Apparatus as per one of the previous claims, characterised by the fact that the front cover (5) has an eccentric toggle lever closure (64), which includes an easily withdrawable axis of rotation (66) which serves as a mounting for the handle (65).

## Revendications

1. Appareil pour traiter des denrées alimentaires, comportant un tambour (2) disposé sur un bâti d'ensemble (1) à une certaine distance libre du sol, tambour qui présente une entrée supérieure (3) que l'on peut fermer, un tiroir de sortie inférieur (4), réalisé d'une seule pièce et présentant sur son côté tourné vers l'intérieur du tambour (2) une configuration en conformité de profil, ainsi qu'une porte frontale articulée (5) dans laquelle, en son centre, est montée rotativement une pale transporteuse (8) de configuration coudée, munie de son propre moyen d'entraînement (7), la branche horizontale (8a) de la pale transporteuse (8) touchant, au moyen d'un bord racleur (9), la surface intérieure de la paroi latérale (2a) du tambour (2), dans lequel parallèlement à l'axe (11) de ce dernier et au-dessous de cet axe est monté rotativement en porte-à-faux, un arbre porte-outil (10) horizontal, lequel porte des outils (45) interchangeables pour hacher, couper, frotter, remuer, mixer, mélanger, émulsifier et/ou pétrir, traverse la paroi frontale du tambour (2) tournée vers l'arrière (12), et se trouve lié en rotation avec un moteur principal (13) également disposé sur le bâti d'ensemble (1), le tiroir de sortie (4) présentant sur son pourtour quatre rebords (22, 22a) qui sont en contact étanche avec un encadrement de sortie par gravité (20), qui entoure l'ouverture inférieure (19) de sortie par gravité, et qui est relié rigidement au tambour (2), le guidage du tiroir de sortie (4) étant constitué par deux rebords de guidage (23), disposés dans la direction du déplacement, qui chevauchent par en dessous deux rebords longitudinaux (22) du tiroir de sortie (4), caractérisé par les particularités suivantes :

a) le tiroir de sortie (4) est en matière plastique ;

b) les deux rebords de guidage (23) tiennent chacun de façon amovible à un dispositif de maintien et de serrage (24-29) fixé à l'encadrement de sortie par gravité (20) ;

c) pour faciliter le démontage et le nettoyage ou bien le lavage, l'ouverture de passage centrale (33) prévue dans la porte frontale articulée (5) pour l'arbre d'entraînement (34) de la pale transporteuse (8), de même que l'ouverture de passage excentrée prévue pour l'arbre porte-outils (10) dans la paroi frontale tournée vers l'arrière, présentent un diamètre nettement plus grand que celui de l'arbre (34 ou 10) qui les traverse, tandis que dans l'espace annulaire ainsi formé, est introduit un joint glissant (36), qui, par serrage d'un écrou de serrage (38 ou 40) monté sur l'arbre (34 ou 10), exerce une action radiale en direction de l'extérieur et assure ainsi l'étanchéité.

2. Appareil conforme à la revendication 1, caractérisé en ce que l'encadrement de sortie par gravité (20) présente des surfaces d'étanchéité (21) associées aux rebords (22, 22a) du tiroir de sortie (4), constituées en acier, qui n'ont que quelques millimètres de large et qui ne font saillie que de quelques dixièmes de millimètre.

3. Appareil conforme à la revendication 1 ou à la revendication 2, caractérisé en ce que le dispositif de maintien et de serrage de chaque rebord de guidage (23) est constitué d'une pièce coudée (24) fixée à l'encadrement de sortie par gravité (20), et engagée par sa branche verticale (24a) dans une rainure longitudinale d'une plaque de serrage (25) fixée au rebord de guidage (23), plaque qui porte une tige filetée (26), laquelle fait saillie vers le haut, au travers d'une fente d'introduction ouverte latéralement (27) de la pièce coudée (24), et porte à son extrémité libre un écrou de serrage (28) qui appuie sur la pièce coudée (24) par l'intermédiaire d'une rondelle Belleville (29).

4. Appareil conforme à l'une des revendications 1, 2 ou 3, caractérisé en ce que le tiroir de sortie (4) est en polyamide.

5. Appareil conforme à l'une des revendications précédentes, caractérisé en ce que les joints glissants (36) destinés à la pale transporteuse et à l'arbre porte-outils (34, 10) sont constitués chacun par deux anneaux en acier identiques comportant une manchette en caoutchouc.

6. Appareil conforme à l'une des revendications précédentes, caractérisé en ce que la pale transporteuse (8) est enfilée, avec une douille (35) qui met sous contrainte le joint glissant (36), sur l'arbre d'entraînement (34) qui a la configuration d'un arbre cannelé et qui fait saillie au travers de la porte frontale (5), et est fixée amoviblement par un écrou borgne (30) de grande dimension, lequel est vissé sur une tige filetée (37) fixée sur le côté frontal de l'arbre cannelé (34) et presse par une lèvre d'étanchéité (39) contre la douille (35) précitée.

7. Appareil conforme à l'une des revendications précédentes, caractérisé en ce que l'écrou de serrage (40) qui sollicite le joint glissant (36) de l'arbre porte-outils (10) est une bague à baïonnette.

8. Appareil conforme à l'une des revendications précédentes, caractérisé en ce que l'entrée supérieure (3) du tambour (2) est disposée dans la paroi latérale du tambour (2a), quelque peu au-dessous de son emplacement le plus élevé, du côté prévu pour l'utilisateur.

9. Appareil conforme à l'une des revendications précédentes, caractérisé par un volet (49) qui ferme une ouverture de chargement supérieure (47), est constitué d'un matériau transparent, a sur son côté intérieur une configuration en conformité de profil, et est maintenu de façon amovible sur un axe de pivotement (50) parallèle à l'axe du tambour (11).

10. Appareil conforme à la revendication 9, caractérisé en ce que l'axe de pivotement (50) présente deux tourillons (51) reliés au volet (49), l'un des tourillons (51) étant engagé en direction axiale dans une oreille (52) correspondante, tandis que l'autre tourillon est glissé dans la direction radiale, ce que permet un méplat, dans une fente d'introduction (53), dimensionnée en conséquence, d'une deuxième oreille (52).

11. Appareil conforme à l'une des revendications 9 ou 10, caractérisé en ce que le verrouillage du volet (49) a lieu au moyen d'une manette pivotante (54), fixée au volet (49) de façon amovible au moyen d'un assemblage par vis (55).

12. Appareil conforme à la revendication 11, caractérisé en ce que l'ouverture de chargement (47) est entourée de tous côtés par une trémie (48) peu profonde qui présente une contre-dépouille en forme de poche (56) destinée à la mise en prise de la manette à poignée (54), et une ouverture de dégagement (58) formée dans la région de cette contre-dépouille (56) par un évidement pratiqué dans une collerette d'appui (57) destinée au volet (49), lequel par un rebord d'étanchéité (59) dimensionné en conséquence s'engage sans discontinuité dans l'ouverture de dégagement (58) précitée.

13. Appareil conforme aux revendications 8 et 12, caractérisé en ce que l'ouverture de dégagement (58) est prévue dans la paroi longitudinale inférieure de la trémie, paroi dont la surface intérieure (60) n'est que faiblement inclinée vers le haut par rapport à l'horizontale.

14. Appareil conforme à l'une des revendications 9 à 13, caractérisé en ce qu'au moins une région partielle de la surface intérieure du volet (49) qui est en conformité de profil est quelque peu en retrait par rapport à la surface intérieure de la paroi latérale du tambour (2a).

15. Appareil conforme à l'une des revendications précédentes, caractérisé en ce que le bord racleur (9) de la pale transporteuse (8) est constitué par une bande en matière plastique, qui est fixée de façon facilement amovible au moyen d'un rebord de blocage (41) vissé sur la branche horizontale de la pale transporteuse (8).

16. Appareil conforme à l'une des revendications précédentes, caractérisé en ce que l'extrémité libre de l'arbre porte-outils (10) présente une fente radiale (42) à contre-dépouille et ouverte vers l'avant, dans laquelle est engagée une goupille transversale (43) d'un manchon porte-outils (44) enfilé sur l'arbre porte-outils (10), ce manchon portant les outils (45) et, à son extrémité tournée vers la porte frontale (5), une collerette annulaire (46), qui présente un faible écartement (a) par rapport à l'écrou de serrage (38) qui fixe la pale transporteuse (8).

17. Appareil conforme à la revendication 16, caractérisé en ce que le manchon porte-outils (44) porte deux outils à pétrir (45) identiques configurés en forme de U, qui sont décalés de 180° l'un de l'autre et qui sont fixés à une certaine distance axiale l'un de l'autre sur les côtés opposés du manchon porte-outils (44) de telle façon que les extrémités des branches de U (45a) voisines l'une de l'autre des deux outils (45) se trouvent de l'un des côtés du manchon et que celles des branches de U (45b) les plus éloignées axialement se trouvent de l'autre côté du manchon, les deux outils (45) formant ensemble, lorsque le manchon porte-outils (44) est vu de face, une courbe apparemment fermée ayant la forme d'un rectangle plat.

18. Appareil conforme à l'une des revendications précédentes, caractérisé en ce que la porte frontale (5) présente une fermeture à genouillère excentrée (64) comprenant un axe de rotation (66) facile à extraire qui supporte rotativement le levier à main (65).

Fig.1

59

49

3

5

7

48

64

65 66

2a

18

15

1

69

Fig. 2

0 213 232

Fig.3

0 213 232

Fig.4

0 213 232

Fig.5

Fig.6

Fig. 7

Fig. 7a

Fig. 7b

Fig. 7c

0 213 232

Fig. 8

Fig. 7d